(19) Europäisches Patentamt / European Patent Office / Office européen des brevets

(11) **EP 2 742 008 B1**

(12) **EUROPÄISCHE PATENTSCHRIFT**

(45) Veröffentlichungstag und Bekanntmachung des Hinweises auf die Patenterteilung:
**18.11.2015   Patentblatt 2015/47**

(51) Int Cl.:
*C02F 5/08* *(2006.01)*    *C08L 33/02* *(2006.01)*
*C08L 35/00* *(2006.01)*

(21) Anmeldenummer: **12742921.5**

(22) Anmeldetag: **06.08.2012**

(86) Internationale Anmeldenummer:
**PCT/EP2012/065308**

(87) Internationale Veröffentlichungsnummer:
**WO 2013/020937 (14.02.2013 Gazette 2013/07)**

(54) **POLYMERMISCHUNGEN ALS BELAGSINHIBITOREN IN WASSERFÜHRENDEN SYSTEMEN**

POLYMER BLENDS AS COATING INHIBITORS IN WATER-CARRYING SYSTEMS

MÉLANGES POLYMÈRES COMME INHIBITEURS DE DÉPÔT DANS DES SYSTÈMES À CIRCULATION D'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2011   EP 11177163**

(43) Veröffentlichungstag der Anmeldung:
**18.06.2014   Patentblatt 2014/25**

(73) Patentinhaber: **BASF SE**
**67056 Ludwigshafen (DE)**

(72) Erfinder:
• DETERING, Jürgen
  **67117 Limburgerhof (DE)**
• GÄDT, Torben
  **83278 Traunstein (DE)**
• NIED, Stephan
  **67435 Neustadt/Wstr. (DE)**
• KEMPTER, Andreas
  **67433 Neustadt (DE)**
• URTEL, Bolette
  **67240 Bobenheim-Roxheim (DE)**
• NEUMANN, Jessica
  **67063 Ludwigshafen (DE)**

(56) Entgegenhaltungen:
CA-C- 1 340 659        US-A- 4 640 793
US-A- 4 698 161        US-A- 4 925 568
US-A- 5 080 801        US-B2- 7 252 770

EP 2 742 008 B1

**Beschreibung**

Die Erfindung betrifft Polymermischungen als Belagsinhibitoren zur Inhibierung der Ausfällung und Ablagerung von Calciumsalzen und Magnesiumsalzen in wasserführenden Systemen.

Die Löslichkeit der meisten Stoffe in Wasser ist begrenzt. Insbesondere in der industriellen Wasserbehandlung ist die Verhinderung mineralischer Ablagerungen in wasserführenden Systemen eine essentielle Aufgabe. Anorganische Stoffe und Salze wie Calcium- und Magnesiumcarbonat, Magnesiumhydroxid, Calcium- und Bariumsulfat und Calciumphosphat besitzen in Wasser eine geringe Löslichkeit. Kommt es zu einer Aufkonzentration dieser gelösten Inhaltsstoffe in wässrigen Systemen (Eindickung), so wird das Löslichkeitsprodukt überschritten mit der Folge, dass diese Stoffe ausfallen und Ablagerungen verursachen. Die Löslichkeit der Stoffe ist zusätzlich abhängig von der Temperatur und dem pH-Wert. Insbesondere weisen viele Stoffe wie Calciumcarbonat, Calciumsulfat oder Magnesiumhydroxid eine inverse Löslichkeit auf, d.h. ihre Löslichkeit sinkt mit zunehmender Temperatur. Dies führt dazu, dass hohe Prozesstemperaturen häufig die Ursache für unerwünschte Ausfällungen und Belagsbildungen in Kühl- und Kesselspeisewassersystemen, auf Wärmeübertragungsflächen oder in Rohrleitungen sind.

Ausfällungen und Ablagerungen anorganischer Stoffe und Salze in wasserführenden Systemen sind nur mit großem Aufwand wieder zu entfernen. Jede mechanische und chemische Reinigung ist kosten- und zeitintensiv und führt unweigerlich zu Produktionsausfällen.

Nicht nur in Kühl- und Kesselspeisewassersystemen wird versucht, die Bildung von Calciumcarbonat, Calciumsulfat, Magnesiumhydroxid- und anderen Salzbelägen zu vermeiden. Auch in der Meerwasserentsalzung durch Destillation und durch Membranverfahren wie Umkehrosmose oder Elektrodialyse ist man bestrebt, diese festen Beläge nicht entstehen zu lassen. Insbesondere in thermischen Meerwasserentsalzungsanlagen spielen beide Effekte, nämlich einerseits Aufkonzentration durch Verdampfen von Wasser und andererseits hohe Verfahrenstemperaturen, eine bedeutende Rolle.

Die Produktivität von Entsalzungsanlagen ist dabei beschränkt durch die obere Verfahrenstemperatur. Es ist wünschenswert, Meerwasserentsalzungsanlagen bei möglichst hoher Verdampfungstemperatur zu betreiben, um eine möglichst hohe Prozesseffizienz zu erreichen und benötigte Energie zur Produktion von Frischwasser zu minimieren. Zur Charakterisierung der Prozesseffizienz nutzt man die Kenngröße $kWh/m^3$ Wasser. Diese Kenngröße kann durch möglichst hohe Prozesstemperaturen für die Verfahren der mehrstufigen Entspannungsverdampfung und der Mehreffekt-Verdampfung minimiert werden. Die maximale Prozesstemperatur in diesen Prozessen wird vor allem begrenzt durch die mit steigender Temperatur immer stärker zunehmende Belagsbildung. Es ist bekannt, dass insbesondere die Ablagerung von basischen Magnesiumsalzen wie Magnesiumhydroxid (Brucit) und Magnesiumcarbonat-hydroxid (Hydromagnesit), sowie Calciumcarbonat und Calciumsulfat in thermischen Entsalzungsanlagen eine kritische Rolle spielen.

Es ist bekannt, dass mittels radikalischer Polymerisation hergestellte niedermolekulare Polyacrylsäuren und ihre Salze aufgrund ihrer dispergierenden und das Kristallwachstum inhibierenden Eigenschaften Verwendung als Belagsverhinderer in der industriellen Wasserbehandlung und bei der Meerwasserentsalzung finden. Für eine gute Wirkung sollte das Molekulargewichtsmittel ($M_W$) dieser Polymere < 50 000 g/mol sein. Oft werden Polyacrylsäuren mit $M_W$ < 10 000 g/mol als besonders effektiv beschrieben. Nachteil dieser Polymere ist ihre mit steigender Temperatur wachsende Härteempfindlichkeit, d.h. die Gefahr, dass die Polymere als Ca- oder Mg-Polyacrylate ausfallen, nimmt zu. Weiterhin besitzen die Polyacrylsäuren nur eine sehr geringe inhibierende Wirkung gegenüber Ablagerungen aus Brucit oder Hydromagnesit.

Weiterhin ist bekannt, dass sulfonsäuregruppenhaltige Copolymere als Belagsinhibitoren, insbesondere zur Vermeidung von Ablagerungen von Calciumphosphaten und -phosphonaten, wirken. Nachteil dieser Polymere ist ihre begrenzte Wirksamkeit zur Vermeidung von $CaCO_3$-Ausfällungen.

Um die Nachteile bestimmter Polymere auszugleichen, werden häufig Mischungen von mehreren verschiedenen Polymeren bzw. Copolymeren eingesetzt. Bei Polymermischungen wird mitunter eine synergistische Wirkung beobachtet.

In EP 388 836 ist ein Gemisch aus einem hydrolysierten Polymaleinsäureanhydrid und einem hydrolysierten Copolymer aus Maleinsäureanhydrid und ethylenisch ungesättigten Comonomeren mit einem Molekulargewicht von 400 bis 800 g/mol zur Inhibierung von Kesselstein-Ablagerungen in wässrigen Systemen offenbart. Als ethylenisch ungesättigte Comonomere werden Acrylsäure, Methacrylsäure, Crotonsäure, Itaconsäure,

Aconitsäure, Itaconanhydrid, Ethylacrylat, Methylmethacrylat, Acrylnitril, Acrylamid, Vinylacetat, Styrol, alpha-Methylstyrol, Vinylsulfonsäure, 2-Acrylamido-2-methylpropansulfonsäure, Methylvinylketon, Acrolein, Ethylen und Propylen genannt.

In US 2009/0101587 A1 ist eine belagsinhibierende Zusammensetzung enthaltend ein Copolymer von Acrylsäure und 2-Acrylamido-2-methylpropansulfonsäure und eine oligomere Phosphinobernsteinsäure offenbart.

In US 5263541 ist eine Mischung aus Polyvinylsulfonat und Polyacrylsäure als Calciumsulfat-Belagsinhibitor offenbart.

DE 41 07 322 beschreibt eine Zusammensetzung aus einem hydrolysierten Homopolymer von Maleinsäureanhydrid mit einem gewichtsmittleren Molekulargewicht von 400 bis 800 und einem Carboxyl enthaltenden Acrylpolymer mit einem Molekulargewicht von 800 bis 9500 als Belagsinhibitor. Als Acrylpolymere werden Polyacrylsäure und Polymethacrylsäure sowie Copolymere von Acrylsäure oder Methacrylsäure mit einem Vinylcarboxylat oder Styrol genannt.

US 4,936,987 beschreibt ein Gemisch aus einem Copolymer von Acrylsäure oder Methacrylsäure und 2-Ayrylamido-2-methylpropylsulfonsäure oder 2-Methacrylamido-2-methylpropylsulfonsäure und wenigstens einer weiteren Komponente. Als weitere Komponenten werden unter anderem Homopolymere von Maleinsäure oder Acrylsäure sowie Copolymere von Acrylamid und Acrylat, Copolymere von Acrylsäure und 2-Hydroxypropylacrylat oder Coplymere von Maleinsäure und sulfoniertem Styrol genannt.

JP 06154789 beschreibt einen Zusammensetzung aus hydrolysiertem Copolymer von Maleinsäureanhydrid und Isobuten und hydrolysiertem Copolymer von Maleinsäureanhydrid und aliphatischem Dien als Belagsinhibitor. Der Inhibitor wirkt vor allem gegen Silikat- und Calciumcarbonatbeläge.

Aufgabe der Erfindung ist es, Zusammensetzungen mit verbesserter belagsinhibierender Wirkung, die insbesondere Ausfällung und Ablagerung von Calciumcarbonat, Calciumsulfat und basischen Magnesiumsalzen in wasserführenden Systemen wirksam verhindern, bereitzustellen.

Gelöst wird die Aufgabe durch eine Polymermischung in fester oder wässriger Formenthaltend, bezogen auf den Polymeranteil

(A) 5 bis 95 Gew.-% eines wasserlöslichen oder wasserdispergierbaren Polymeren mit einem gewichtsmittleren Molekulargewicht von 1 000 g/mol bis 20 000 g/mol aus

(a1) 20 bis 80 Gew.-% mindestens eines Monomeren ausgewählt aus der Gruppe bestehend aus $C_2$- bis $C_8$-Olefinen, Allylalkohol, Isoprenol, $C_1$- bis $C_4$-Alkylvinylethern und Vinylestern von $C_1$- bis $C_4$-Monocarbonsäuren,

(a2) 20 bis 80 Gew.-% mindestens einer monoethylenisch ungesättigten $C_3$- bis $C_8$-Carbonsäure, eines Anhydrids oder Salzes derselben,

(a3) 0 bis 50 Gew.-% einer oder mehrerer Sulfonsäuregruppen enthaltender Monomere,

(B) 5 bis 95 Gew.-% eines wasserlöslichen bzw. wasserdispergierbaren Polymeren mit einem gewichtsmittleren Molekulargewicht von 1000 g/mol bis 50 000 g/mol aus

(b1) 30 bis 100 Gew.-% mindestens einer monoethylenisch ungesättigten $C_3$-bis $C_8$-Carbonsäure, eines Anhydrids oder Salzes derselben,

(b2) 0 bis 70 Gew.-% eines oder mehrerer Sulfonsäuregruppen enthaltender Monomere,

(b3) 0 bis 70 Gew.-% mindestens eines nichtionischen Monomers der Formel (I)

$$H_2C=C(R^1)(CH_2)_xO[R^2\text{-}O]_o\text{-}R^3 \qquad (I),$$

in der $R^1$ für Wasserstoff oder Methyl, $R^2$ für gleiche oder verschiedene, lineare oder verzweigte $C_2$-$C_6$-Alkylenreste, die blockweise oder statistisch angeordnet sein können, und $R^3$ für Wasserstoff oder einen geradkettigen oder verzweigten $C_1$-$C_4$-Alkylrest, x für 0, 1 oder 2 und o für eine Zahl von 3 bis 50 stehen.

Es wurde gefunden, dass Mischungen aus den Polymeren (A) und (B) eine höhere Wirksamkeit bei der Inhibierung von Ablagerungen von Calciumcarbonat, Calciumsulfat und basischen Magnesiumsalzen aufweisen als die gleiche Menge nur eines Polymeren (A) oder (B) alleine. Es können ein oder mehrere verschiedene Polymere (A) mit ein oder mehreren verschiedenen Polymeren (B) abgemischt werden.

Die erfindungsgemäße Polymermischung enthält 5 bis 95 Gew.-% eines wasserlöslichen oder wasserdispergierbaren Polymeren (A) aus 20 bis 80 Gew.-% mindestens eines Monomeren (a1) ausgewählt aus der Gruppe bestehend aus $C_2$- bis $C_8$-Olefinen, Allylalkohol, Isoprenol, $C_1$- bis $C_4$-Alkylvinylethern und Vinylestern von $C_1$- bis $C_4$-Monocarbonsäuren, und 20 bis 80 Gew.-% mindestens eines Monomeren (a2) ausgewählt aus ungesättigten $C_3$- bis $C_8$-Carbonsäuren, Anhydriden oder Salzen derselben, sowie optional 0 bis 50 Gew.-% eines oder mehrerer Sulfonsäuregruppen enthaltender Monomere (a3).

Die Polymermischung enthält 5 bis 95 Gew.-% eines wasserlöslichen bzw. wasserdispergierbaren Polymeren (B) aus 30 bis 100 Gew.-% mindestens eines Monomeren (b1) ausgewählt aus monoethylenisch ungesättigten $C_3$- bis $C_8$-Carbonsäuren, Anhydriden oder Salzen derselben, sowie optional 0 bis 70 Gew.% eines oder mehrerer Sulfonsäuregruppen enthaltender Monomere (b2).

Geeignete $C_2$- bis $C_8$-Olefine, die als Monomere (a1) eingesetzt werden können, sind beispielsweise Ethylen, Propylen, n-Buten, Isobuten, 1-Penten,1-Hexen, 1-Hepten und Diisobuten, bevorzugt sind Isobuten und Diisobuten.

Geeignete Alkylvinylether, die als Monomere (a1) eingesetzt werden können, enthalten 1 bis 4 Kohlenstoffatome in der Alkylkette. Beispiele sind Vinylmethylether, Vinylethylether, Vinyl-n-propylether, Vinylisopropylether, Vinyl-n-butylether und Vinylisobutylethers.

Vinylester von $C_1$- bis $C_4$-Monocarbonsäuren, die als Monomere (a1) eingesetzt werden können, sind beispielsweise Vinylformiat, Vinylacetat, Vinylpropionat und Vinylbutyrat.

Bevorzugte Monomere (a1) sind Isobuten, Diisobuten, Vinylacetat, Vinylmethylether Allylalkohol und Isoprenol. Besonders bevorzugt sind Isobuten, Diisobuten und Isoprenol.

Geeignete monoethylenisch ungesättigte $C_3$-$C_8$-Carbonsäuren, die als Monomere (a2) und (b1) eingesetzt werden können, sind beispielsweise Acrylsäure, Methacrylsäure, Ethacrylsäure, Vinylessigsäure, Allylessigsäure, Crotonsäure, Maleinsäure, Fumarsäure, Mesaconsäure und Itaconsäure sowie deren wasserlösliche Salze. Soweit die genannten ungesättigten $C_3$-$C_8$-Carbonsäuren Anhydride bilden können, sind auch diese als Monomere (a1) geeignet, beispielsweise Maleinsäureanhydrid, Itaconsäureanhydrid und Methacrylsäureanhydrid.

Bevorzugte monoethylenisch ungesättigte $C_3$-$C_8$-Carbonsäuren sind Acrylsäure, Methacrylsäure, Maleinsäure und Fumarsäure sowie deren Anhydride und wasserlösliche Salze. Diese sind sowohl als Monomere (a2) als auch als Monomere (b1) bevorzugt. Wasserlösliche Salze sind insbesondere die Natrium- und Kaliumsalze der Säuren.

Sulfonsäuregruppen-haltigen Monomeren (a3) bzw. (b2) sind bevorzugt solche der Formeln (IIa) und (IIb)

$$H_2C=CH-X-SO_3H \qquad (IIa),$$

$$H_2C=C(CH_3)-X-SO_3H \qquad (IIb),$$

worin X für eine optional vorhandene Spacergruppe steht, die ausgewählt sein kann aus -$(CH_2)_n$- mit n = 0 bis 4, -$C_6H_4$-, -$CH_2$-O-$C_6H_4$-, -C(O)-NH-C(CH_3)_2-, -C(O)-NH-CH(CH_2CH_3)-, -C(O)NH-CH(CH_3)CH_2-, -C(O)NH-C(CH_3)_2CH_2-, -C(O)NH-CH_2CH(OH)CH_2-, -C(O)NH-CH_2-, -C(O)NH-CH_2CH_2- und -C(O)NH-CH_2CH_2CH_2-.

Besonders bevorzugte Sulfonsäuregruppen-haltige Monomere sind dabei 1-Acryl-amido-1-propansulfonsäure (X = -C(O)NH-CH(CH_2CH_3)- in Formel IIa), 2-Acrylamido-2-propansulfonsäure (X = -C(O)NH-CH(CH_3)CH_2- in Formel IIa), 2-Acrylamido-2-methylpropansulfonsäure (AMPS, X = -C(O)NH-C(CH_3)_2CH_2- in Formel IIa), 2-Methacrylamido-2-methylpropansulfonsäure (X = -C(O)NH-C(CH_3)_2CH_2- in Formel IIb), 3-Methacrylamido-2-hydroxypropansulfonsäure (X = -C(O)NH-CH_2CH(OH)CH_2- in Formel IIb), Allylsulfonsäure (X = $CH_2$ in Formel IIa), Methallylsulfonsäure (X = $CH_2$ in Formel IIb), Allyloxybenzolsulfonsäure (X = -$CH_2$-O-$C_6H_4$- in Formel IIa), Methallyloxybenzolsulfonsäure (X = -$CH_2$-O-$C_6H_4$- in Formel IIb), 2-Hydroxy-3-(2-propenyloxy)propansulfonsäure, 2-Methyl-2-propen-1-sulfonsäure (X = $CH_2$ in Formel IIb), Styrolsulfonsäure (X = $C_6H_4$ in Formel IIa), Vinylsulfonsäure (X nicht vorhanden in Formel IIa), 3-Sulfopropylacrylat (X = -C(O)O-CH_2CH_2CH_2- in Formel IIa), 2-Sulfoethylmethacrylat (X = -C(O)O-CH_2CH_2- in Formel IIb), 3-Sulfopropylmethacrylat (X = -C(O)O-CH_2CH_2CH_2-in Formel IIb), Sulfomethacrylamid (X = -C(O)NH- in Formel IIb), Sulfomethylmethacrylamid (X = -C(O)NH-CH_2- in Formel IIb) sowie Salze der genannten Säuren. Geeignete Salze sind im Allgemeinen wasserlösliche Salze, bevorzugt die Natrium-, Kalium und Ammoniumsalze der genannten Säuren.

Insbesondere bevorzugt sind 1-Acrylamidopropansulfonsäure, 2-Acrylamido-2-propansulfonsäure, 2-Acrylamido-2-methylpropansulfonsäure (AMPS), 2-Methacrylamido-2-methylpropansulfonsäure, 3-Methacrylamido-2-hydroxypropansulfonsäure, 2-Hydroxy-3-(2-propenyloxy)propansulfonsäure, 2-Sulfoethylmethacrylat, Styrolsulfonsäure, Vinylsulfonsäure, Allylsulfonsäure (ALS) und Methallylsulfonsäure sowie Salze der genannten Säuren. Diese sind sowohl als Monomere (a3) als auch (b2) bevorzugt.

Ganz besonders bevorzugte Sulfonsäuregruppen-haltige Monomere sind 2-Acrylamido-2-methylpropansulfonsäure (AMPS) und Allylsulfonsäure sowie deren wasserlösliche Salze, insbesondere deren Natrium-, Kalium- und Ammoniumsalze. Diese sind sowohl als Monomere (a3) als auch (b2) bevorzugt.

Als Komponente (b3) enthält das Copolymer 0 bis 70 Gew.-% mindestens eines nichtionischen Monomers der Formel (I)

$$H_2C=C(R^1)(CH_2)_xO[R^2-O]_o-R^3 \qquad (I),$$

in der $R^1$ für Wasserstoff oder Methyl, $R^2$ für gleiche oder verschiedene $C_2$-$C_6$-Alkylenreste, die linear oder verzweigt und blockweise und/oder statistisch angeordnet sein können, und $R^3$ für Wasserstoff oder einen geradkettigen oder verzweigten $C_1$-$C_4$-Alkylrest, x für 0, 1, 2 und o für eine natürliche Zahl von 3 bis 50 stehen.

Die Alkylenreste können auch blockweise und statistisch angeordnet sein, also in ein oder mehreren Blöcken aus gleichen Alkylenoxidresten blockweise und daneben in ein oder mehreren Blöcken aus zwei oder mehr verschiedenen Alkylenoxidresten statistisch angeordnet sein. Dies wird von der Formulierung "blockweise oder statistisch angeordnet" mit umfasst.

Bevorzugte nichtionische Monomere (b3) sind solche auf Basis von Allylalkohol ($R^1$ = H; x = 1) und Isoprenol ($R^1$ = Methyl; x = 2).

Das nichtionische Monomer (b3) enthält bevorzugt im Mittel 8 bis 40, besonders bevorzugt 10 bis 30, speziell 10 bis 25 Alkylenoxid-Einheiten. Der Index o in Formel (I) bezieht sich auf die mittlere Zahl der Alkylenoxid-Einheiten.

Bevorzugte Alkylenoxideinheiten $R^2$-O sind Ethylenoxid, 1,2-Propylenoxid und 1,2-Butylenoxid, besonders bevorzugt sind Ethylenoxid und 1,2-Propylenoxid.

In einer speziellen Ausführungsform enthalten die nichtionischen Monomere (b3) nur Ethylenoxid-Einheiten. In einer weiteren speziellen Ausführungsform enthalten die nichtionischen Monomere (b3) Ethylenoxid- und 1,2-Propylenoxid-Einheiten, die blockweise oder statistisch angeordnet sein können.

Bevorzugt ist $R^3$ Wasserstoff oder Methyl.

Im Allgemeinen beträgt das gewichtsmittlere Molekulargewicht der Copolymere (A) 1000 bis 20000 g/mol, bevorzugt 1500 bis 15000 g/mol und besonders bevorzugt 2000 bis 10000 g/mol und insbesondere 2000 bis 8000 g/mol.

Das Molekulargewicht wird mittels Gelpermeationschromatographie gegen Polyacrylsäurestandards ermittelt.

Im Allgemeinen beträgt der Polydispersitätsindex des Polymere (A) $M_w / M_n \leq 3{,}0$, bevorzugt $\leq 2{,}5$.

Bei den Polymeren (A) handelt es sich bevorzugt um binäre Copolymere oder um Terpolymere. Handelt es sich um binäre Copolymere, so enthalten sie bevorzugt 20 bis 60 Gew.-% Monomere (a1) und 40 bis 80 Gew.-% Monomere (a2), besonders bevorzugt 25 bis 50 Gew.-% Monomere (a1) und 50 bis 75 Gew.-% Monomere (a2).

Handelt es sich um Terpolymere, so enthalten sie bevorzugt 25 bis 50 Gew.-% Monomere (a1), 30 bis 60 Gew.-% Monomere (a2) und 10 bis 30 Gew.-% Monomere (a3).

Es können auch mehrere verschiedene Monomere (a1) und/oder mehrere verschiedene Monomere (a2) in den Polymeren A enthalten sein. Beispielsweise können Terpolymere und Quaterpoylmere nur Monomere (a1) und (a2) enthalten, bevorzugt in den oben für binäre Copolymere angegebenen Mengen.

In einer bevorzugten Ausführungsform der Erfindung ist Polymer (A) ein Copolymer aus Isobuten und Maleinsäure, bevorzugt in den oben für binäre Copolymere angegebenen Mengenverhältnissen.

In einer weiteren bevorzugten Ausführungsform der Erfindung ist Polymer (A) ein Copolymer aus Isoprenol und Maleinsäure, bevorzugt in den oben für binäre Copolymere angegebenen Mengenverhältnissen.

In einer weiteren Ausführungsform der Erfindung ist Polymer (A) ein Terpolymer aus Isoprenol, Maleinsäure und 2-Acrylamido-2-methylpropansulfonsäure, bevorzugt in den oben für Terpolymere angegebenen Mengenverhältnissen. In einer weiteren bevorzugten Ausführungsform wird an Stelle von 2-Acrylamido-2-methylpropansulfonsäure Allylsulfonsäure eingesetzt.

In einer weiteren Ausführungsform der Erfindung ist Polymer (A) ein Terpolymer aus Isoprenol, Maleinsäure und Acrylsäure, bevorzugt in den oben angegebenen Mengenverhältnissen.

Bei den Polymeren (B) handelt es sich um Homopolymere oder Copolymere. Copolymere können aus Monomeren (b1), aus Monomeren (b1) und (b2), aus Monomeren (b1) und (b3) und aus Monomeren (b1), (b2) und (b3) bestehen. Handelt es sich um Copolymere aus den Monomeren (b1) und (b2), so enthalten sie bevorzugt 50 bis 90 Gew.-% Monomere (b1) und 10 bis 50 Gew.-% Monomere (b2), besonders bevorzugt 60 bis 85 Gew.-% Monomere (b1) und 15 bis 40 Gew.-% Monomere (b2).

Handelt es sich um Copolymere aus den Monomeren (b1) und (b3), so enthalten sie bevorzugt 50 bis 95 Gew.-% Monomere (b1) und 5 bis 50 Gew.-% Monomere (b3), besonders bevorzugt 60 bis 90 Gew.-% Monomere (b1) und 10 bis 40 Gew.-% Monomere (b3).

Handelt es sich um Copolymere aus den Monomeren (b1), (b2) und (b3), so enthalten sie bevorzugt 30 bis 80 Gew.-% Monomere (b1), 10 bis 50 Gew.-% Monomere (b2) und 5 bis 50 Gew.% Monomere (b3), besonders bevorzugt 40 bis 75 Gew.-% Monomere (b1), 15 bis 40 Gew.-% Monomere (b2) und 5 bis 40 Gew.% Monomere (b3). Bevorzugt sind binäre Copolymere, es kann sich aber auch um Terpolymere handeln.

In einer bevorzugten Ausführungsform der Erfindung ist das Polymer (B) ein Acrylsäure-Homoplymer.

In einer weiteren bevorzugten Ausführungsform der Erfindung ist Polymer (B) ein Co-polymer aus Acrylsäure und 2-Acrylamido-2-methylpropansulfonsäure, bevorzugt in den oben angegebenen Mengenverhältnissen.

In einer weiteren bevorzugten Ausführungsform der Erfindung ist Polymer (B) ein Copolymer aus Acrylsäure und Allylsulfonsäure, bevorzugt in den oben angegebenen Mengenverhältnissen.

Im Allgemeinen beträgt das gewichtsmittlere Molekulargewicht der Polymere (B) 1000 bis 50000 g/mol, bevorzugt 1000 bis 30000 g/mol und besonders bevorzugt 1500 bis 20000 g/mol und insbesondere 1500 bis 10000 g/mol.

Das Molekulargewicht wird mittels Gelpermeationschromatographie gegen Polyacrylsäurestandards ermittelt.

Im Allgemeinen beträgt der Polydispersitätsindex der Polymere (B) $M_w / M_n \leq 2{,}5$, bevorzugt $\leq 2{,}0$.

Gegenstand der vorliegenden Erfindung sind auch Zusammensetzungen enthaltend

(A) 3 bis 95 Gew.-% der wasserlöslichen oder wasserdispergierbaren Polymere mit einem gewichtsmittleren Molekulargewicht von 1 000 g/mol bis 20 000 g/mol aus

(a1) 20 bis 80 Gew.-% mindestens eines Monomeren ausgewählt aus der Gruppe bestehend aus $C_2$- bis $C_8$-Olefinen, Allylalkohol, Isoprenol, $C_1$- bis $C_4$-Alkylvinylethern und Vinylestern von $C_1$- bis $C_4$-Monocarbonsäuren,

(a2) 20 bis 80 Gew.-% mindestens einer monoethylenisch ungesättigten $C_3$- bis $C_8$-Carbonsäure, eines Anhydrids oder Salzes derselben,

(a3) 0 bis 50 Gew.-% einer oder mehrerer Sulfonsäuregruppen enthaltender Monomere,

(B) 3 bis 95 Gew.-% der wasserlöslichen bzw. wasserdispergierbaren Polymere mit einem gewichtsmittleren Molekulargewicht von 1000 g/mol bis 50 000 g/mol aus

(b1) 30 bis 100 Gew.-% mindestens einer monoethylenisch ungesättigten $C_3$-bis $C_8$-Carbonsäure, eines Anhydrids oder Salzes derselben,

(b2) 0 bis 70 Gew.-% eines oder mehrerer Sulfonsäuregruppen enthaltender Monomere,

(b3) 0 bis 70 Gew.-% eines oder mehrerer nichtionischer Monomere der Formel (I)

$$H_2C=C(R^1)(CH_2)_xO[R^2-O]_o-R^3 \qquad (I),$$

in der $R^1$ für Wasserstoff oder Methyl, $R^2$ für gleiche oder verschiedene, lineare oder verzweigte $C_2$-$C_6$-Alkylenreste, die blockweise oder statistisch angeordnet sein können, und $R^3$ für Wasserstoff oder einen geradkettigen oder verzweigten $C_1$-$C_4$-Alkylrest, x für 0, 1 oder 2 und o für eine Zahl von 3 bis 50 stehen,

(C) 0 bis 80 Gew.-% Phosphonate,

(D) 0 bis 90 Gew.-% Wasser,

(E) 0 bis 50 Gew.-% Additive wie Polyphosphate, Zinksalze, Molybdatsalze, organische Korrosionsinhibitoren, Biozide, Komplexbildner, Tenside oder Entschäumer.

Das Gewichtsverhältnis der Polymere (A) : (B) beträgt im Allgemeinen von 1 : 20 bis 20: 1.

Die erfindungsgemäßen Zusammensetzungen können optional bis zu 80 Gew.-% Phosphonate (C) enthalten. Phosphonate können die belagsinhibierende Wirkung der Polymere zusätzlich unterstützen. Weiterhin wirken sie als Korrosionsinhibitoren.

Beispiele für Phosponate sind 1-Hydroxyethan-1,1-diphosphonsäure (HEDP), 2-Phosphonobutan-1,2,4-tricarbonsäure (PBTC), Aminotrimethylenphosphonsäure (ATMP) Diethylentriaminpenta(methylenphosphonsäure) (DTPMP) und Ethylendiamintetra(methylenphophonsäure) (EDTMP), sowie deren wasserlösliche Salze, insbesondere deren Natrium-, Kalium und Ammoniumsalze.

Darüber hinaus können die erfindungsgemäßen Zusammensetzungen bis zu 90 Gew.-% Wasser enthalten.

Darüber hinaus können die Formulierungen neben den erfindungsgemäßen Polymermischungen, gegebenenfalls den Phosphonaten und gegebenenfalls von Wasser je nach Anforderung noch bis zu 50 Gew.-% weitere Additive (E) wie Polyphosphate, Zinksalze, Molybdatsalze, organische Korrosionsinhibitoren wie Benzotriazol, Tolyltriazol, Benzimidazol oder Ethinylcarbinolalkoxylate, Biozide, Komplexbildner und/oder Tenside enthalten.

Die Herstellung der Polymermischungen aus Polymeren (A) und (B) erfolgt in der Regel durch Mischen der jeweiligen Polymerlösungen in Rührsystemen wie z.B. in Rührkesseln, durch pneumatisches Umwälzen in Behältern, durch Umwälzen mit Pumpen oder durch Zwangsströmungen in Rohren. Einbauten in den Rührsystemen, sog. Strombrecher, können den Mischvorgang beschleunigen. Durch Einbauen von festen Mischelementen in Rohrleitungen wie Blechlamellen, Wendeln oder Stegen oder von Mischdüsen kann der Mischvorgang ebenfalls beschleunigt werden. Die Auswahl des Mischers bzw. des Mischverfahrens richtet sich nach den jeweiligen Erfordernissen, insbesondere nach den Viskositäten und Scherfestigkeiten der zu mischenden Polymerlösungen. Feste Polymermischungen können durch Sprühtrocknen und Sprühgranulierung der wässrigen Polymermischungen oder durch Mischen der festen Polymere mittels rotierender Mischtrommel, Schaufelmischer, Schneckenmischer, Wirbelschichtmischer oder Luftstoßmischer hergestellt werden. Gegenstand der Erfindung sind sowohl feste, beispielsweise durch Sprühtrocknen oder Sprühgranulierung erhaltene Polymermischungen, als auch wässrige Polymermischungen. Der Wassergehalt von wässrigen Polymermischungen beträgt im Allgemeinen bis zu 90 Gew.-%, vorzugsweise bis zu 70 Gew.-%, besonders bevorzugt bis zu 50 Gew.-%.

Gegenstand der Erfindung ist auch die Verwendung der Polymermischungen und Zusammensetzungen als Belagsinhibitoren zur Inhibierung der Ausfällung und Ablagerung von Calciumsalzen und Magnesiumsalzen in wasserführenden Systemen. Calciumsalze, deren Ausfällung inhibiert wird, sind im Allgemeinen Calciumcarbonat, Calciumsulfat, Calciumphosphonate und Calciumphosphate, insbesondere Calciumcarbonat und Calciumsulfat. Magnesiumsalze, deren Ausfällung inhibiert wird, sind im Allgemeinen basische Magnesiumsalze wie Hydromagnesit und Brucit.

Wasserführende Systeme, in denen die Polymermischungen vorzugsweise verwendet werden, sind Meerwasser-Entsalzungsanlagen, Brackwasser-Entsalzungsanlagen, Kühlwassersysteme und Kesselspeisewassersysteme.

Überraschenderweise wurde zudem gefunden, dass die erfindungsgemäßen Polymermischungen aufgrund ihrer dispergierenden und Fe(III)-Ionen stabilisierenden Eigenschaften hervorragend geeignet sind, eisenhaltige Ablagerungen in wasserführenden Systemen zu verhindern.

Gegenstand der Erfindung ist daher weiterhin die Verwendung der Polymermischungen und Zusammensetzungen als Belagsinhibitoren zur Inhibierung der Ausfällung und Ablagerung von eisenhaltigen Salzen und Verbindungen. Insbesondere werden Ablagerungen aus Eisenoxiden und Eisenoxidhydraten (Eisenhydroxide) verhindert.

Im Allgemeinen werden die erfindungsgemäßen Mischungen den wasserführenden Systemen in Mengen von 0,1 mg/l bis 100 mg/l zugegeben. Die optimale Dosierung richtet sich nach den Erfordernissen der jeweiligen Anwendung bzw. nach den Betriebsbedingungen des jeweiligen Verfahrens. So werden bei der thermischen Meerwasserentsalzung die Mischungen bevorzugt in Konzentrationen von 0,5 mg/l bis 10 mg/l eingesetzt. In industriellen Kühlkreisläufen oder Kesselspeisewassersystemen finden Dosierungen bis zu 100 mg/l Anwendung. Häufig werden Wasseranalysen durchgeführt, um den Anteil belagsbildender Salze und somit die optimale Dosierung zu ermitteln.

Die Erfindung wird durch die nachstehenden Beispiele näher erläutert.

**Beispiele**

Die Bestimmung der mittleren Molekulargewichte erfolgte mittels GPC.

| | |
|---|---|
| Gerät: | Waters Alliance 2690 mit UV-Detektor (Waters 2487) und RI-Detektor (Waters 2410) |
| Säulen: | Shodex OHpak SB 804HQ and 802.5HQ (PHM gel, 8 x 300 mm, pH 4,0 bis 7,5) |
| Eluent: | 0,05 M wässrige Ammoniumformiat / Methanol-Mischung = 80:20 (Volumenteile) |
| Flußrate: | 0,5 mL/min |
| Temperatur: | 50°C |
| Injektion: | 50 bis 100 $\mu$L |
| Detektion: | RI und UV |

Molekulargewichte der Polymere wurden relativ zu Polyacrylsäure-Standards der Firma Varian Inc bestimmt. Die Molekulargewichtsverteilungskurven der Polyacrylsäure-Standards wurden mittels Lichtstreuung bestimmt. Die Massen der Polyacrylsäurestandards betrugen 115 000, 47 500, 28 000, 16 000, 7 500, 4 500, 4 100, 2 925 und 1 250 g/mol.

Die Herstellung der Polymere 2,3,6, 7, 12 und 14 erfolgt durch radikalische Polymerisation der Monomere in Wasser unter Verwendung von Natriumperoxodisulfat als Initiator und Natriumhypophosphit (Polymer 2 und 7) und Natriumbisulfit (Polymer 3, 6,12 und 14) als Molekulargewichtsregler.

Die Herstellung der Polymere 4, 5, 8, 9 und 13 erfolgt durch radikalische Polymerisation der Monomere unter Verwendung eines Redoxsystems aus Wasserstoffperoxid, Eisen(II)sulfat und Natriumhydroxymethansulfinat als Initiator und Mercaptoethanol als Regler.

Die Polymere 1, 10 und 11 werden durch radikalische Polymerisation von Maleinsäureanhydrid mit den jeweiligen Comonomeren in o-Xylol oder Toluol unter Verwendung von t-Butylperpivalat als Initiator hergestellt. Im Anschluss an die Polymerisation erfolgen ein Lösemittelaustausch und die Hydrolyse des Anhydridrings.

Die wässrigen Polymerlösungen wurden jeweils auf pH 7,5 (mit Natronlauge) und einem Feststoffgehalt von 40,0 Gew.-% eingestellt.

Die Polymere 1, 4, 5, 8, 9, 10 und 11 sind Polymere (A) entsprechend obenstehender Definition.

Die Polymere 2, 3, 6, 7, 12, 13 und 14 sind Polymere (B) entsprechend obenstehender Definition.

Polymer 1: Copolymer aus Maleinsäure und Isobuten (Gew.-Verhältnis 70:30), Na-Salz, $M_w$ 4000 g/mol, wässrige Lösung, pH 7,5, Feststoffgehalt: 40,0 Gew.-%

Polymer 2: Copolymer aus Acrylsäure und 2-Acrylamido-2-methylpropansulfonsäure (Gew.-Verhältnis 75:25), Na-Salz, $M_w$ 7000 g/mol, wässrige Lösung, pH 7,5, Feststoffgehalt: 40,0 Gew.-%

Polymer 3: Copolymer aus Acrylsäure und 2-Acrylamido-2-methylpropansulfonsäure (Gew.-Verhältnis 75:25), Na-Salz, $M_w$ 8000 g/mol, wässrige Lösung, pH 7,5, Feststoffgehalt: 40,0 Gew.-%

Polymer 4: Copolymer aus Maleinsäure und Isoprenol (Gew.-Verhältnis 65:35), Na-Salz, $M_w$ 4000 g/mol, wässrige Lösung, pH 7,5, Feststoffgehalt: 40,0 Gew.-%

Polymer 5: Copolymer aus Maleinsäure und Isoprenol (Gew.-Verhältnis 60:40), Na-Salz, $M_w$ 7500 g/mol, wässrige Lösung, pH 7,5, Feststoffgehalt: 40,0 Gew.-%

Polymer 6: Polyacrylsäure, Na-Salz, $M_w$ 1200 g/mol, wässrige Lösung, pH 7,5, Feststoffgehalt 40,0 Gew.-%

Polymer 7: Polyacrylsäure, Na-Salz, $M_w$ 3500 g/mol, wässrige Lösung, pH 7,5, Feststoffgehalt 40,0 Gew.-%

Polymer 8: Copolymer aus Maleinsäure, Isoprenol und 2-Acrylamido-2-methylpropansulfonsäure (Gew.-Verhältnis 40:40:20), Na-Salz, $M_w$ 7000 g/mol, wässrige Lösung, pH 7,5, Feststoffgehalt: 40,0 Gew.-%

Polymer 9: Copolymer aus Maleinsäure, Isoprenol und Acrylsäure (Gew.-Verhältnis 35:40:25), Na-Salz, $M_w$ 3800 g/mol, wässrige Lösung, pH 7,5, Feststoffgehalt: 40,0 Gew.-%

Polymer 10: Copolymer aus Maleinsäure und Methylvinylether (Gew.-Verhältnis 70:30); Na-Salz, $M_w$ 9500 g/mol, wässrige Lösung, pH 7,5, Feststoffgehalt 40,0 Gew.-%

Polymer 11: Copolymer aus Maleinsäure und Vinylacetat (Gew.-Verhältnis 60:40), Na-Salz, $M_w$ 6500 g/mol, wässrige Lösung, pH 7,5, Feststoffgehalt 40,0 Gew.-%

Polymer 12: Copolymer aus Acrylsäure und Allylsulfonsäure (Gew.-Verhältnis 80:20), Na-Salz, $M_w$ 5100, wässrige Lösung, Feststoffgehalt 40,0 Gew.-%

Polymer 13: Copolymer aus Acrylsäure und Isoprenolpolyethylenglykol der Formel $CH_2=C(CH_3)CH_2CH_2-(EO)_{11,3}-H$ (Gew.-Verhältnis 90:10), Na-Salz, Mw 6200 g/mol, wässrige Lösung, Feststoffgehalt 40,0 Gew.-%

Polymer 14: Terpolymer aus Acrylsäure, 2-Acrylamido-2-methylpropansulfonsäure und Allylalkoholalkoxylat der Formel $CH_2=CHCH_2O-(EO)_{16}-H$ (Gew.-Verhältnis 55:30:15), Na-Salz, Mw 8500 g/mol, wässrige Lösung, Feststoffgehalt 40,0 Gew.%

Die Herstellung der Polymermischungen erfolgt durch Mischen der 40 gew.-%igen Polymerlösungen. Die Lösungsmengen werden so gewählt, dass eine Mischung der gewünschten Polymerzusammensetzung resultiert. Eine Mischung mit einer 50 : 50-Zusammensetzung weist gleiche Mengenanteile (in Gew.-%) der eingesetzten Polymere auf.

**Verwendung als Belagsinhibitor**

Beispiele 1 bis 3

**Calciumcarbonat-Inhibierungstest**

Eine Lösung aus $NaHCO_3$, $Mg_2SO_4$, $CaCl_2$ und Polymer wird 2 h bei 70 °C im Wasserbad geschüttelt. Nach Filtration der noch warmen Lösung über einen 0,45 $\mu$m Milexfilter, wird der Ca-Gehalt des Filtrats komplexometrisch oder mittels einer $Ca^{2+}$-selektiven Elektrode ermittelt und durch Vergleich vorher/nachher die $CaCO_3$-Inhibierung in % gemäß nachstehender Formel I ermittelt:

| | |
|---|---|
| $Ca^{2+}$ | 215 mg/L |
| $Mg^{2+}$ | 43 mg/L |
| $HCO_3^-$ | 1220 mg/L |
| $Na^+$ | 460 mg/L |
| $Cl^-$ | 380 mg/L |
| $SO_4^{2-}$ | 170 mg/L |
| Polymer-Mischung (100%ig) | 3 mg/L |

(fortgesetzt)

| Temperatur | 70 °C |
|---|---|
| Zeit | 2 Stunden |
| pH | 8,0-8,5 |

Formel I:

$$CaCO_3\text{- Inhibierung (\%)} = \frac{mg\ (Ca^{2+})\ \text{nach 24 h} - mg\ (Ca^{2+})\ \text{Blindwert nach 24 h}}{mg\ (Ca^{2+})\ \text{Nullwert} - mg\ (Ca^{2+})\ \text{Blindwert nach 24 h}} \times 100$$

Tabelle 1

|  | MischungsZusammensetzung in Gew.% | Inhibierung [%] |
|---|---|---|
| **Beispiel 1** |  |  |
| Polymer 4 |  | 58,4 |
| Polymer 7 |  | 80,7 |
| Mischung 4/7 | 50:50 | 83,4 |
| Mischung 4/7 | 35:65 | 86,8 |
| **Beispiel 2** |  |  |
| Polymer 1 |  | 46,0 |
| Polymer 3 |  | 64,8 |
| Polymer 6 |  | 68,5 |
| Mischung 1/3/6 | 30:30:40 | 72,0 |
| **Beispiel 3** |  |  |
| Polymer 1 |  | 46,0 |
| Polymer 13 |  | 66,7 |
| Mischung 1/13 | 25:75 | 73,2 |

Beispiele 4 bis 7

**Calciumsulfat-Inhibierungstest**

Eine Lösung aus NaCl, $Na_2SO_4$, $CaCl_2$ und Polymer wurde 24 h bei 70 °C im Wasserbad geschüttelt. Nach Filtration der noch warmen Lösung über einen 0,45 $\mu$m Milexfilter wird der Ca-Gehalt des Filtrats komplexometrisch oder mittels einer $Ca^{2+}$-selektiven Elektrode ermittelt und durch Vergleich vorher/nachher die $CaSO_4$-Inhibierung in % gemäß nachstehender Formel II ermittelt:

| $Ca^{2+}$ | 2940 mg/l |
|---|---|
| $SO_4^{2-}$ | 7200 mg/l |
| $Na^+$ | 6400 mg/l |
| $Cl^-$ | 9700 mg/l |
| Polymer-Mischung (100%ig) | 10 mg/l |
| Temperatur | 70 °C |
| Zeit | 24 Stunden |
| pH | 8,0-8,5 |

Formel II:

$$CaSO_4\text{- Inhibierung (\%)} = \frac{mg\,(Ca^{2+})\,\text{nach 24 h} - mg\,(Ca^{2+})\,\text{Blindwert nach 24 h}}{mg\,(Ca^{2+})\,\text{Nullwert} - mg\,(Ca^{2+})\,\text{Blindwert nach 24 h}} \times 100$$

Tabelle 2

|  | MischungsZusammensetzung in Gew.% | Inhibierung [%] |
|---|---|---|
| **Beispiel 4** |  |  |
| Polymer 5 |  | 51,9 |
| Polymer 6 |  | 91,0 |
| Mischung 5/6 | 50:50 | 93,7 |
| **Beispiel 5** |  |  |
| Polymer 7 |  | 68,9 |
| Polymer 11 |  | 47,7 |
| Mischung 7/11 | 70:30 | 72,3 |
| **Beispiel 6** |  |  |
| Polymer 4 |  | 58,4 |
| Polymer 12 |  | 78,9 |
| Mischung 4/12 | 25:75 | 81,3 |
| **Beispiel 7** |  |  |
| Polymer 4 |  | 58,4 |
| Polymer 14 |  | 57,8 |
| Mischung 4/14 | 50:50 | 66,0 |

Beispiele 8 bis 10

**Versuche zur Inhibierung von basischen Mg-Salzablagerungen (DSL-Methode)**

Die belagsinhibierende Wirkung der erfindungsgemäßen Polymere wird mit Hilfe einer modifizierten Version des "Differential Scale Loop (DSL)" Gerätes von PSL Systemtechnik durchgeführt. Hierbei handelt es sich um ein "Tube Blocking System" als vollautomatisierte Laboranlage zur Untersuchung von Ausfällungen und Ablagerungen von Salzen in Pipelines und Wasserrohrleitungen. In diesem Gerät wird in modifizierter Betriebsweise eine Magnesiumchlorid-Lösung A mit einer NatriumhydrogencarbonatLösung B, die das zu testende Polymer enthält, bei einer Temperatur von 120 °C und einem spezifischen Druck von 2 bar an einem Mischpunkt im Volumenverhältnis 1:1 zusammengemischt und durch eine Testkapillare aus Edelstahl bei konstanter Temperatur mit konstanter Flussrate gepumpt. Hierbei wird der Differenzdruck zwischen Mischpunkt (Kapillaranfang) und Kapillarende bestimmt. Ein Anstieg des Differenzdrucks deutet auf eine Belagsbildung durch basische Magnesiumsalze (Hydromagnesit, Brucit) innerhalb der Kapillare hin. Die Zeit, die bis zu einem Druckanstieg von definierter Höhe (0,1 bar) gemessen wird, ist ein Maß für die belagsinhibierende Wirkung des eingesetzten Polymers.

Die spezifischen Versuchsbedingungen sind:

Lösung A: 100 mM $MgCl_2$
Lösung B: 200 mM $NaHCO_3$
Konzentration des Polymers nach Mischen von A und B: 10 mg/l
Kapillarlänge: 2,5 m
Kapillardurchmesser: 0,88 mm

Kapillarmaterial: Edelstahl
Temperatur: 120°C
Gesamtdurchflussrate: 5ml/min
Systemdruck: 2 bar
Druckanstieg-Schwellenwert: 0,1 bar

Tabelle 3: Zeit bis zum Druckanstieg um 0,1 bar (Mittelwert aus vier Messungen)

|  | MischungsZusammensetzung in Gew.% | Zeit [min] |
|---|---|---|
| **Beispiel 8** |  |  |
| Polymer 1 |  | 18,5 |
| Polymer 3 |  | 23,9 |
| Mischung 1/3 | 50:50 | 28,0 |
| **Beispiel 9** |  |  |
| Polymer 2 |  | 23,5 |
| Polymer 8 |  | 24,9 |
| Mischung 2/8 | 40:60 | 30,3 |
| **Beispiel 10** |  |  |
| Polymer 6 |  | 8,2 |
| Polymer 9 |  | 20,0 |
| Polymer 10 |  | 17,7 |
| Mischung 6/9/10 | 20:50:30 | 22,5 |

**Patentansprüche**

1. Polymermischung in fester oder wässriger Form, enthaltend, bezogen auf den Polymeranteil,

(A) 5 bis 95 Gew.-% eines wasserlöslichen oder wasserdispergierbaren Polymeren mit einem gewichtsmittleren Molekulargewicht von 1 000 bis 20 000 g/mol, bestimmt mittels Gelpermeationschromatographie gegen Polyacrylsäure-Standards, aus

(a1) 20 bis 80 Gew.-% mindestens eines Monomeren ausgewählt aus der Gruppe bestehend aus $C_2$- bis $C_{18}$-Olefinen, Allylalkohol, Isoprenol, $C_1$- bis $C_4$-Alkylvinylethern und Vinylestem von $C_1$- bis $C_4$-Monocarbonsäuren,
(a2) 20 bis 80 Gew.-% mindestens einer monoethylenisch ungesättigten $C_3$- bis $C_8$-Carbonsäure, eines Anhydrids oder Salzes derselben,
(a3) 0 bis 50 Gew.-% einer oder mehrerer Sulfonsäuregruppen enthaltender Monomere,

(B) 5 bis 95 Gew.-% eines wasserlöslichen bzw. wasserdispergierbaren Polymeren mit einem gewichtsmittleren Molekulargewicht von 1000 bis 50 000 g/mol, bestimmt mittels Gelpermeationschromatographie gegen Polyacrylsäure-Standards, aus

(b1) 30 bis 100 Gew.-% mindestens einer monoethylenisch ungesättigten $C_3$- bis $C_8$-Carbonsäure, eines Anhydrids oder Salzes derselben,
(b2) 0 bis 70 Gew.-% eines oder mehrerer Sulfonsäuregruppen enthaltender Monomere,
(b3) 0 bis 70 Gew.-% eines oder mehrerer nichtionischer Monomere der Formel (I)

$$H_2C=C(R^1)(CH_2)_xO[R^2\text{-}O]_o\text{-}R^3 \qquad (I),$$

in der $R^1$ für Wasserstoff oder Methyl, $R^2$ für gleiche oder verschiedene, lineare oder verzweigte $C_2$-$C_6$-Al-

kylenreste, die blockweise oder statistisch angeordnet sein können, und $R^3$ für Wasserstoff oder einen geradkettigen oder verzweigten $C_1$-$C_4$-Alkylrest, x für 0, 1 oder 2 und o für eine Zahl von 3 bis 50 stehen.

2. Polymermischung nach Anspruch 1, **dadurch gekennzeichnet, dass** Monomere (a1) ausgewählt sind aus der Gruppe bestehend aus Isobuten, Diisobuten, VI-nylacetat, Vinylmethylether, Allylalkohol und Isoprenol.

3. Polymermischung nach Anspruch 1 oder 2, **dadurch gekennzeichnet, dass** Monomere (a2) oder (b1) ausgewählt sind aus der Gruppe bestehend aus Acrylsäure, Methacrylsäure, Ethacrylsäure, Vinylessigsäure, Allylessigsäure, Crotonsäure, Maleinsäure, Fumarsäure, Mesaconsäure und Itaconsäure, deren Anhydriden und wasserlöslichen Salzen.

4. Polymermischung nach einem der Ansprüche 1 bis 3, **dadurch gekennzeichnet, dass** Monomere (a3) oder (b2) ausgewählt sind aus der Gruppe bestehend aus 1-Acrylamidopropansulfonsäure, 2-Acrylamido-2-propansulfonsäure, 2-Acrylamido-2-methylpropansulfonsäure (AMPS), 2-Methacrylamido-2-methylpropansulfonsäure, 3-Methacrylamido-2-hydroxypropansulfonsäure, 2-Hydroxy-3-(2-propenyloxy)propansulfonsäure, 2-Sulfoethylmethacrylat, Styrolsulfonsäure, Vinylsulfonsäure, Allylsulfonsäure (ALS) und Methallylsulfonsäure sowie deren wasserlöslichen Salzen.

5. Polymermischung nach einem der Ansprüche 1 bis 4, **dadurch gekennzeichnet, dass** das Polymer (A) ein Copolymer aus 20 bis 60 Gew.-% Monomeren (a1) und 40 bis 80 Gew.-% Monomeren (a2) ist.

6. Polymermischung nach einem der Ansprüche 1 bis 5, **dadurch gekennzeichnet, dass** das Polymer (A) ein Copolymer aus Isobuten und Maleinsäure ist.

7. Polymermischung nach einem der Ansprüche 1 bis 5, **dadurch gekennzeichnet, dass** das Polymer (A) ein Copolymer aus Isoprenol und Maleinsäure ist.

8. Polymermischung nach einem der Ansprüche 1 bis 4, **dadurch gekennzeichnet, dass** das Polymer (A) ein Terpolymer aus 25 bis 50 Gew.-% Monomeren (a1), 30 bis 60 Gew.-% Monomeren (a2) und 10 bis 30 Gew.-% Monomeren (a3) ist.

9. Polymermischung nach einem der Ansprüche 1 bis 4 und 8, **dadurch gekennzeichnet, dass** das Polymer (A) eine Terpolymer aus Isoprenol, Maleinsäure und 2-Acrylamido-2-methylpropansulfonsäure oder ein Terpolymer aus Isoprenol, Maleinsäure und Allylsulfonsäure ist.

10. Polymermischung nach einem der Ansprüche 1 bis 4 und 8, **dadurch gekennzeichnet, dass** das Polymer (A) eine Terpolymer aus Isoprenol, Maleinsäure und Acrylsäure ist.

11. Polymermischung nach einem der Ansprüche 1 bis 10, **dadurch gekennzeichnet, dass** Polymer (B) ein Homopolymer aus einer monoethylenisch ungesättigten $C_3$- bis $C_8$-Carbonsäure, eines Anhydrids oder Salzes derselben ist.

12. Polymermischung nach Anspruch 11, **dadurch gekennzeichnet, dass** Polymer (B) ein Acrylsäure-Homopolymer ist.

13. Polymermischung nach einem der Ansprüche 1 bis 10, **dadurch gekennzeichnet, dass** Polymer (B) ein Copolymer aus 50 bis 90 Gew.-% Monomeren (b1) und 10 bis 50 Gew.-% Monomeren (b2) ist.

14. Polymermischung nach einem der Ansprüche 1 bis 10, **dadurch gekennzeichnet, dass** Polymer (B) ein Copolymer aus 50 bis 95 Gew.-% Monomeren (b1) und 5 bis 50 Gew.-% Monomeren (b3) ist.

15. Polymermischung nach einem der Ansprüche 1 bis 10, **dadurch gekennzeichnet, dass** Polymer (B) ein Copolymer aus 30 bis 80 Gew.-% Monomeren (b1), 10 bis 50 Gew.-% Monomeren (b2) und 5 bis 50 Gew.-% Monomeren (b3) ist.

16. Polymermischung nach Anspruch 14 oder 15, **dadurch gekennzeichnet, dass** Monomere (b3) solche auf Basis von Allylalkohol ($R^1$ = H; x = 1) oder von Isoprenol ($R^1$ = Methyl; x = 2) sind.

17. Polymermischung nach einem der Ansprüche 1 bis 10 und 13, **dadurch gekennzeichnet, dass** Polymer (B) ein Copolymer aus Acrylsäure und 2-Acrylamido-2-methylpropansulfonsäure ist.

**18.** Polymermischung nach einem der Ansprüche 1 bis 10 und 13, **dadurch gekennzeichnet, dass** das Polymer (B) ein Copolymer aus Acrylsäure und Allylsulfonsäure ist.

**19.** Zusammensetzung enthaltend

(A) 3 bis 95 Gew.-% eines wasserlöslichen bzw. wasserdispergierbaren Polymeren mit einem gewichtsmittleren Molekulargewicht von 1 000 bis 20 000 g/mol, bestimmt mittels Gelpermeationschromatographie gegen Polyacrylsäure-Standards, aus

(a1) 20 bis 80 Gew.-% mindestens eines Monomeren ausgewählt aus der Gruppe bestehend aus $C_2$- bis $C_8$-Olefinen, Allylalkohol, Isoprehol, $C_1$- bis $C_4$-Alkylvinylethern und Vinylestern von $C_1$- bis $C_4$-Monocarbonsäuren,
(a2) 20 bis 80 Gew.-% mindestens einer monoethylenisch ungesättigten $C_3$- bis $C_8$-Carbonsäure, eines Anhydrids oder Salzes derselben,
(a3) 0 bis 50 Gew.-% einer oder mehrerer Sulfonsäuregruppen enthaltender Monomere,

(B) 3 bis 95 Gew.-% eines wasserlöslichen bzw. wasserdispergierbaren Polymeren mit einem gewichtsmittleren Molekulargewicht von 1000 bis 50 000 g/mol, bestimmt mittels Gelpermeationschromatographie gegen Polyacrylsäure-Standards, aus

(b1) 30 bis 100 Gew.-% mindestens einer monoethylenisch ungesättigten $C_3$- bis $C_8$-Carbonsäure, eines Anhydrids oder Salzes derselben,
(b2) 0 bis 70 Gew.-% eines oder mehrerer Sulfonsäuregruppen enthaltender Monomere,
(b3) 0 bis 70 Gew.-% eines oder mehrerer nichtionischer Monomere der Formel (I)

$$H_2C=C(R^1)(CH_2)_xO[R^2\text{-}O]_o\text{-}R^3 \qquad (I),$$

in der $R^1$ für Wasserstoff oder Methyl, $R^2$ für gleiche oder verschiedene, lineare oder verzweigte $C_2$-$C_6$-Alkylenreste, die blockweise oder statistisch angeordnet sein können, und $R^3$ für Wasserstoff oder einen geradkettigen oder verzweigten $C_1$-$C_4$-Alkylrest, x für 0, 1 oder 2 und o für eine Zahl von 3 bis 50 stehen,

(C) 0 bis 80 Gew.-% Phosphonate,
(D) 0 bis 90 Gew.-% Wasser,
(E) 0 bis 50 Gew.-% Additive wie Polyphosphate, Zinksalze, Molybdatsalze, organische Korrosionsinhibitoren, Biozide, Komplexbildner, Tenside oder Entschäumer.

**20.** Verwendung von Polymermischungen nach einem der Ansprüche 1 bis 18 oder von Zusammensetzungen nach Anspruch 19 als Belagsinhibitoren in wasserführenden Systemen.

**21.** Verwendung nach Anspruch 20 zur Inhibierung der Ausfällung und Ablagerung von Calciumsalzen und Magnesiumsalzen.

**22.** Verwendung nach Anspruch 21 zur Inhibierung der Ausfällung und Ablagerung von Calciumcarbonat, Calciumsulfat und von basischen Magnesiumsalzen.

**23.** Verwendung nach einem der Ansprüche 20 bis 22 in Meerwasser-Entsalzungsanlagen, Brackwasser-Entsalzungsanlagen, Kühlwassersystemen und Kesselspeisewassersystemen.

**Claims**

**1.** A polymer mixture in solid or aqueous form, comprising, based on the polymer fraction,

(A) 5 to 95% by weight of a water-soluble or water-dispersible polymer having a weight-average molecular weight of 1000 to 20 000 g/mol, determined by means of gel-permeation chromatography in comparison with polyacrylic acid standards, of

(a1) 20 to 80% by weight of at least one monomer selected from the group consisting of $C_2$ to $C_8$ olefins,

allyl alcohol, isoprenol, $C_1$ to $C_4$ alkyl vinyl ethers and vinyl esters of $C_1$ to $C_4$ monocarboxylic acids,

(a2) 20 to 80% by weight of at least one monoethylenically unsaturated $C_3$ to $C_8$ carboxylic acid, an anhydride or salt of same,

(a3) 0 to 50% by weight of one or more monomers comprising sulfonic acid groups,

(B) 5 to 95% by weight of a water-soluble or water-dispersible polymer having a weightaverage molecular weight of 1000 to 50 000 g/mol, determined by means of gel-permeation chromatography in comparison with polyacrylic acid standards, of

(b1) 30 to 100% by weight of at least one monoethylenically unsaturated $C_3$ to $C_8$ carboxylic acid, an anhydride or salt of same,

(b2) 0 to 70% by weight of one or more monomers comprising sulfonic acid groups,

(b3) 0 to 70% by weight of one or more nonionic monomers of the formula (I)

$$H_2C=C(R^1) (CH_2)_xO[R^2O]_o\text{-}R^3 \qquad (I),$$

where $R^1$ is hydrogen or methyl, $R^2$ is identical or different, linear or branched, $C_2$-$C_6$ alkylene radicals, which can be arranged in blocks or randomly, and $R^3$ is hydrogen or a straight-chain or branched $C_1$-$C_4$ alkyl radical, x is 0, 1 or 2, and o is a number from 3 to 50.

2. The polymer mixture according to claim 1, wherein monomers (a1) are selected from the group consisting of isobutene, diisobutene, vinyl acetate, vinyl methyl ether, allyl alcohol and isoprenol.

3. The polymer mixture according to claim 1 or 2, wherein monomer (a2) or (b1) is selected from the group consisting of acrylic acid, methacrylic acid, ethacrylic acid, vinylacetic acid, allylacetic acid, crotonic acid, maleic acid, fumaric acid, mesaconic acid and itaconic acid, anhydrides thereof and water-soluble salts thereof.

4. The polymer mixture according to any one of claims 1 to 3, wherein monomer (a3) or (b2) is selected from the group consisting of 1-acrylamidopropanesulfonic acid, 2-acrylamido-2-propanesulfonic acid, 2-acrylamido-2-methylpropanesulfonic acid (AMPS), 2-methacrylamido-2-methylpropanesulfonic acid, 3-methacrylamido-2-hydroxypropanesulfonic acid, 2-hydroxy-3-(2-propenyloxy)propanesulfonic acid, 2-sulfoethyl methacrylate, styrenesulfonic acid, vinylsulfonic acid, allylsulfonic acid (ALS) and methallylsulfonic acid and the water-soluble salts thereof.

5. The polymer mixture according to any one of claims 1 to 4, wherein the polymer (A) is a copolymer of 20 to 60% by weight of monomer (a1) and 40 to 80% by weight of monomer (a2).

6. The polymer mixture according to any one of claims 1 to 5, wherein the polymer (A) is a copolymer of isobutene and maleic acid.

7. The polymer mixture according to any one of claims 1 to 5, wherein the polymer (A) is a copolymer of isoprenol and maleic acid.

8. The polymer mixture according to any one of claims 1 to 4, wherein the polymer (A) is a terpolymer of 25 to 50% by weight of monomer (a1), 30 to 60% by weight of monomer (a2) and 10 to 30% by weight of monomer (a3).

9. The polymer mixture according to any one of claims 1 to 4 and 8, wherein the polymer (A) is a terpolymer of isoprenol, maleic acid and 2-acrylamido-2-methylpropanesulfonic acid or a terpolymer of isoprenol, maleic acid and allylsulfonic acid.

10. The polymer mixture according to any one of claims 1 to 4 and 8, wherein the polymer (A) is a terpolymer of isoprenol, maleic acid and acrylic acid.

11. The polymer mixture according to any one of claims 1 to 10, wherein polymer (B) is a homopolymer of a monoethylenically unsaturated $C_3$ to $C_8$ carboxylic acid, an anhydride or salt of same.

12. The polymer mixture according to claim 11, wherein polymer (B) is an acrylic acid homopolymer.

13. The polymer mixture according to any one of claims 1 to 10, wherein polymer (B) is a copolymer of 50 to 90% by weight of monomer (b1) and 10 to 50% by weight of monomer (b2).

14. The polymer mixture according to any one of claims 1 to 10, wherein polymer (B) is a copolymer of 50 to 95% by weight of monomer (b1) and 5 to 50% by weight of monomer (b3).

15. The polymer mixture according to any one of claims 1 to 10, wherein polymer (B) is a copolymer of 30 to 80% by weight of monomer (b1), 10 to 50% by weight of monomer (b2) and 5 to 50% by weight of monomer (b3).

16. The polymer mixture according to either claim 14 or 15, wherein monomer (b3) is that based on allyl alcohol ($R^1$ = H; x = 1) or isoprenol ($R^1$ = methyl; x = 2).

17. The polymer mixture according to any one of claims 1 to 10 and 13, wherein polymer (B) is a copolymer of acrylic acid and 2-acrylamido-2-methylpropanesulfonic acid.

18. The polymer mixture according to any one of claims 1 to 10 and 13, wherein polymer (B) is a copolymer of acrylic acid and allylsulfonic acid.

19. A composition comprising

(A) 3 to 95% by weight of a water-soluble or water-dispersible polymer having a weight-average molecular weight of 1000 to 20 000 g/mol, determined by means of gel-permeation chromatography in comparison with polyacryclic acid standards, of

(a1) 20 to 80% by weight of at least one monomer selected from the group consisting of $C_2$ to $C_8$ olefins, allyl alcohol, isoprenol, $C_1$ to $C_4$ alkyl vinyl ethers and vinyl esters of $C_1$ to $C_4$ monocarboxylic acids,
(a2) 20 to 80% by weight of at least one monoethylenically unsaturated $C_3$ to $C_8$ carboxylic acid, an anhydride or salt of same,
(a3) 0 to 50% by weight of one or more monomers comprising sulfonic acid groups,

(B) 3 to 95% by weight of a water-soluble or water-dispersible polymer having a weight-average molecular weight of 1000 to 50 000 g/mol, determined by means of gel-permeation chromatography in comparison with polyacryclic acid standards, of

(b1) 30 to 100% by weight of at least one monoethylenically unsaturated $C_3$ to $C_8$ carboxylic acid, an anhydride or salt of same,
(b2) 0 to 70% by weight of one or more monomers comprising sulfonic acid groups,
(b3) 0 to 70% by weight of one or more nonionic monomers of the formula (I)

$$H_2C=C(R^1) (CH_2)_x O[R^2O]_o\text{-}R^3 \qquad (I),$$

where $R^1$ is hydrogen or methyl, $R^2$ is identical or different, linear or branched, $C_2$-$C_6$ alkylene radicals, which can be arranged in blocks or randomly, and $R^3$ is hydrogen or a straight-chain or branched $C_1$-$C_4$ alkyl radical, x is 0, 1 or 2, and o is a number from 3 to 50,

(C) 0 to 80% by weight of phosphonates,
(D) 0 to 90% by weight of water;
(E) 0 to 50% by weight of additives such as polyphosphates, zinc salts, molybdate salts, organic corrosion inhibitors, biocides, complexing agents, surfactants or antifoams.

20. The use of polymer mixtures according to any one of claims 1 to 18 or of compositions according to claim 19 as deposit inhibitors in water-bearing systems.

21. The use according to claim 20 for inhibiting the precipitation and sedimentation of calcium salts and magnesium salts.

22. The use according to claim 21 for inhibiting the precipitation and sedimentation of calcium carbonate, calcium sulfate and basic magnesium salts.

23. The use according to any one of claims 20 to 22 in seawater desalination plants, brackish water desalination plants, cooling water systems and boiler feed water systems.

## Revendications

1. Mélange de polymères sous forme solide ou aqueuse, contenant, par rapport à la proportion de polymères,

   (A) 5 à 95 % en poids d'un polymère soluble dans l'eau ou dispersible dans l'eau d'un poids moléculaire moyen en poids de 1 000 à 20 000 g/mol, déterminé par chromatographie par perméation de gel contre un étalon acide polyacrylique, constitué par

   (a1) 20 à 80 % en poids d'au moins un monomère choisi dans le groupe constitué par les oléfines en $C_2$ à $C_8$, l'alcool allylique, l'isoprénol, les éthers vinyliques d'alkyle en $C_1$ à $C_4$ et les esters vinyliques d'acides monocarboxyliques en $C_1$ à $C_4$,
   (a2) 20 à 80 % en poids d'au moins un acide carboxylique monoéthyléniquement insaturé en $C_3$ à $C_8$, un anhydride ou un sel de celui-ci,
   (a3) 0 à 50 % en poids d'un ou de plusieurs monomères contenant des groupes acide sulfonique,

   (B) 5 à 95 % en poids d'un polymère soluble dans l'eau ou dispersible dans l'eau d'un poids moléculaire moyen en poids de 1 000 à 50 000 g/mol, déterminé par chromatographie par perméation de gel contre un étalon acide polyacrylique, constitué par

   (b1) 30 à 100 % en poids d'au moins un acide carboxylique monoéthyléniquement insaturé en $C_3$ à $C_8$, un anhydride ou un sel de celui-ci,
   (b2) 0 à 70 % en poids d'un ou de plusieurs monomères contenant des groupes acide sulfonique,
   (b3) 0 à 70 % en poids d'un ou de plusieurs monomères non ioniques de formule (I)

   $$H_2C=C(R^1)\,(CH_2)_xO[R^2O]_o\text{-}R^3 \qquad (I)$$

   dans laquelle $R^1$ représente hydrogène ou méthyle, les $R^2$ représentent des radicaux alkylène en $C_2$-$C_6$ linéaires ou ramifiés, identiques ou différents, qui peuvent être agencés séquentiellement ou statistiquement, et $R^3$ représente hydrogène ou un radical alkyle en $C_1$-$C_4$ linéaire ou ramifié, x représente 0, 1 ou 2, et o représente un nombre de 3 à 50.

2. Mélange de polymères selon la revendication 1, **caractérisé en ce que** les monomères (a1) sont choisis dans le groupe constitué par l'isobutène, le diisobutène, l'acétate de vinyle, l'éther de vinyle et de méthyle, l'alcool allylique et l'isoprénol.

3. Mélange de polymères selon la revendication 1 ou 2, **caractérisé en ce que** les monomères (a2) ou (b1) sont choisis dans le groupe constitué par l'acide acrylique, l'acide méthacrylique, l'acide éthacrylique, l'acide vinylacétique, l'acide allylacétique, l'acide crotonique, l'acide maléique, l'acide fumarique, l'acide mésaconique et l'acide itaconique, leurs anhydrides et leurs sels solubles dans l'eau.

4. Mélange de polymères selon l'une quelconque des revendications 1 à 3, **caractérisé en ce que** les monomères (a3) ou (b2) sont choisis dans le groupe constitué par l'acide 1-acrylamidopropanesulfonique, l'acide 2-acrylamido-2-propanesulfonique, l'acide 2-acrylamido-2-méthylpropanesulfonique (AMPS), l'acide 2-méthacrylamido-2-méthylpropanesulfonique, l'acide 3-méthacrylamido-2-hydroxypropanesulfonique, l'acide 2-hydroxy-3-(2-propényloxy)propanesulfonique, le méthacrylate de 2-sulfoéthyle, l'acide styrènesulfonique, l'acide vinylsulfonique, l'acide allylsulfonique (ALS) et l'acide méthallylsulfonique, ainsi que leurs sels solubles dans l'eau.

5. Mélange de polymères selon l'une quelconque des revendications 1 à 4, **caractérisé en ce que** le polymère (A) est un copolymère de 20 à 60 % en poids de monomères (a1) et 40 à 80 % en poids de monomères (a2).

6. Mélange de polymères selon l'une quelconque des revendications 1 à 5, **caractérisé en ce que** le polymère (A) est un copolymère d'isobutène et d'acide maléique.

7. Mélange de polymères selon l'une quelconque des revendications 1 à 5, **caractérisé en ce que** le polymère (A) est un copolymère d'isoprénol et d'acide maléique.

**8.** Mélange de polymères selon l'une quelconque des revendications 1 à 4, **caractérisé en ce que** le polymère (A) est un terpolymère de 25 à 50 % en poids de monomères (a1), 30 à 60 % en poids de monomères (a2) et 10 à 30 % en poids de monomères (a3).

**9.** Mélange de polymères selon l'une quelconque des revendications 1 à 4 et 8, **caractérisé en ce que** le polymère (A) est un terpolymère d'isoprénol, d'acide maléique et d'acide 2-acrylamido-2-méthylpropanesulfonique ou un terpolymère d'isoprénol, d'acide maléique et d'acide allylsulfonique.

**10.** Mélange de polymères selon l'une quelconque des revendications 1 à 4 et 8, **caractérisé en ce que** le polymère (A) est un terpolymère d'isoprénol, d'acide maléique et d'acide acrylique.

**11.** Mélange de polymères selon l'une quelconque des revendications 1 à 10, **caractérisé en ce que** le polymère (B) est un homopolymère d'un acide carboxylique monoéthyléniquement insaturé en $C_3$ à $C_8$, d'un anhydride ou d'un sel de celui-ci.

**12.** Mélange de polymères selon la revendication 11, **caractérisé en ce que** le polymère (B) est un homopolymère de l'acide acrylique.

**13.** Mélange de polymères selon l'une quelconque des revendications 1 à 10, **caractérisé en ce que** le polymère (B) est un copolymère de 50 à 90 % en poids de monomères (b1) et 10 à 50 % en poids de monomères (b2).

**14.** Mélange de polymères selon l'une quelconque des revendications 1 à 10, **caractérisé en ce que** le polymère (B) est un copolymère de 50 à 95 % en poids de monomères (b1) et 5 à 50 % en poids de monomères (b3).

**15.** Mélange de polymères selon l'une quelconque des revendications 1 à 10, **caractérisé en ce que** le polymère (B) est un copolymère de 30 à 80 % en poids de monomères (b1), 10 à 50 % en poids de monomères (b2) et 5 à 50 % en poids de monomères (b3).

**16.** Mélange de polymères selon la revendication 14 ou 15, **caractérisé en ce que** les monomères (b3) sont à base d'alcool allylique ($R^1$ = H ; x = 1) ou d'isoprénol ($R^1$ = méthyle ; x = 2).

**17.** Mélange de polymères selon l'une quelconque des revendications 1 à 10 et 13, **caractérisé en ce que** le polymère (B) est un copolymère d'acide acrylique et d'acide 2-acrylamido-2-méthylpropanesulfonique.

**18.** Mélange de polymères selon l'une quelconque des revendications 1 à 10 et 13, **caractérisé en ce que** le polymère (B) est un copolymère d'acide acrylique et d'acide allylsulfonique.

**19.** Composition contenant :

(A) 3 à 95 % en poids d'un polymère soluble dans l'eau ou dispersible dans l'eau d'un poids moléculaire moyen en poids de 1 000 à 20 000 g/mol, déterminé par chromatographie par perméation de gel contre un étalon acide polyacrylique, constitué par

(a1) 20 à 80 % en poids d'au moins un monomère choisi dans le groupe constitué par les oléfines en $C_2$ à $C_8$, l'alcool allylique, l'isoprénol, les éthers vinyliques d'alkyle en $C_1$ à $C_4$ et les esters vinyliques d'acides monocarboxyliques en $C_1$ à $C_4$,
(a2) 20 à 80 % en poids d'au moins un acide carboxylique monoéthyléniquement insaturé en $C_3$ à $C_8$, un anhydride ou un sel de celui-ci,
(a3) 0 à 50 % en poids d'un ou de plusieurs monomères contenant des groupes acide sulfonique,

(B) 3 à 95 % en poids d'un polymère soluble dans l'eau ou dispersible dans l'eau d'un poids moléculaire moyen en poids de 1 000 à 50 000 g/mol, déterminé par chromatographie par perméation de gel contre un étalon acide polyacrylique, constitué par

(b1) 30 à 100 % en poids d'au moins un acide carboxylique monoéthyléniquement insaturé en $C_3$ à $C_8$, un anhydride ou un sel de celui-ci,
(b2) 0 à 70 % en poids d'un ou de plusieurs monomères contenant des groupes acide sulfonique,
(b3) 0 à 70 % en poids d'un ou de plusieurs monomères non ioniques de formule (I)

$$H_2C=C(R^1)\,(CH_2)_{xO}[R^2O]_o\text{-}R^3 \qquad (I)$$

dans laquelle $R^1$ représente hydrogène ou méthyle, les $R^2$ représentent des radicaux alkylène en $C_2$-$C_6$ linéaires ou ramifiés, identiques ou différents, qui peuvent être agencés séquentiellement ou statistiquement, et $R^3$ représente hydrogène ou un radical alkyle en $C_1$-$C_4$ linéaire ou ramifié, x représente 0, 1 ou 2, et o représente un nombre de 3 à 50,

(C) 0 à 80 % en poids de phosphonates
(D) 0 à 90 % en poids d'eau,
(E) 0 à 50 % en poids d'additifs tels que des polyphosphates, des sels de zinc, des sels de molybdate, des inhibiteurs de corrosion organiques, des biocides, des agents complexants, des tensioactifs ou des démoussants.

20. Utilisation de mélanges de polymères selon l'une quelconque des revendications 1 à 18 ou de compositions selon la revendication 19 en tant qu'inhibiteurs de dépôt dans des systèmes de conduction d'eau.

21. Utilisation selon la revendication 20 pour l'inhibition de la précipitation et du dépôt de sels de calcium et de sels de magnésium.

22. Utilisation selon la revendication 21 pour l'inhibition de la précipitation et du dépôt de carbonate de calcium, de sulfate de calcium et de sels de magnésium basiques.

23. Utilisation selon l'une quelconque des revendications 20 à 22 dans des unités de dessalage d'eau de mer, dans des unités de dessalage d'eau saumâtre, dans des systèmes d'eau de refroidissement et dans des systèmes d'eau d'alimentation.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 388836 A
- US 20090101587 A1
- US 5263541 A
- DE 4107322
- US 4936987 A
- JP 06154789 B